## Europäisches Patentamt
## European Patent Office
## Office européen des brevets

(11) Veröffentlichungsnummer: **0 149 444**
A2

# EUROPÄISCHE PATENTANMELDUNG

(21) Anmeldenummer: 84890235.9

(22) Anmeldetag: 04.12.84

(51) Int. Cl.⁴: **C 05 F 7/00**
C 05 F 9/00, B 01 F 3/06

(30) Priorität: 04.01.84 AT 17/84

(43) Veröffentlichungstag der Anmeldung:
24.07.85 Patentblatt 85/30

(84) Benannte Vertragsstaaten:
BE CH DE FR GB IT LI LU NL SE

(71) Anmelder: VOEST-ALPINE Aktiengesellschaft
Friedrichstrasse 4
A-1011 Wien(AT)

(72) Erfinder: Klinar, Gottfried
Alpenstrasse 33
A-8707 Leoben(AT)

(74) Vertreter: Haffner, Thomas M., Dr. et al,
Patentanwaltskanzlei Dipl.-Ing. Adolf Kretschmer Dr.
Thomas M. Haffner Schottengasse 3a
A-1014 Wien(AT)

(54) Einrichtung zur Belüftung von Rottegut.

(57) Für die Belüftung von Rottegut wird vorgeschlagen, an die Abscheidekammern (10) mit Druckmedium beaufschlagte Injektordüsen (13) mit ihrer Saugseite anzuschließen. Derartige Injektordüsen (13) können in einfacher Weise angesteuert werden und saugen die für die Belüftung erforderliche Luft durch das Rottegut. Es können mehrere solcher Injektordüsen parallel zueinander angeordnet werden und jeweils gesonderten Rottezellen (9) zugeordnet sein. Die Belüftung kann dem jeweiligen Rottezustand in verschiedenen Rottezellen angepaßt werden.

EP 0 149 444 A2

Einrichtung zur Belüftung von Rottegut

Die Erfindung bezieht sich auf eine Einrichtung zur Belüftung von Rottegut, mit welcher Luft durch das Rottegut hindurchgesaugt wird. Für die Belüftung von Rotte ist es bekannt, diese in einzelne Rottezellen einzubringen und dort zum Zwecke der Kompostierung einer biologischen Umsetzung zu unterwerfen. Diese biologische Umsetzung verläuft exotherm und es ist, um eine Schädigung der Biomasse zu vermeiden und um die Geruchsbelästigung gering zu halten, erforderlich, die Temperatur des Rottegutes zumindest in Abständen abzusenken. Weiters ist es für die Tätigkeit der Mikroorganismen vorteilhaft, das Rottegut in Abständen zu belüften.

Bei den bisher bekannten Einrichtungen zu diesem Zweck wurden Sauggebläse, insbesondere Radialgebläse eingesetzt. Die aus den Rottezellen abgesaugten Dämpfe waren zumeist relativ aggressiv und gemeinsam mit den abgesaugten Dämpfen wurden auch eine Reihe von Verschmutzungen abgesaugt. Fallweise ist bei derartigen Anordnungen saugseitig Wasser anzutreffen, insbesondere bei Überflutung der Saugkammern und dies führt bei Sauggebläsen zu Schäden der Wellen bzw. des Laufwerkes. Mit Rücksicht auf die hohen Investitionen für derartige Sauggebläse war es darüber hinaus bei derartigen Einrichtungen zumeist immer nur möglich, mehrere Rottezellen gemeinsam über ein derartiges Sauggebläse zu belüften, wodurch den tatsächlichen Verhältnissen in einzelnen Rottezellen nur ungenügend Rechnung getragen wurde. In regelmäßigen Abständen war es auch erforderlich die Lüfterräder zu wuchten, wodurch sich große Stillstandszeiten und hohe Kosten ergaben.

Die Erfindung zielt nun darauf ab, eine einfache und betriebssichere Einrichtung der eingangs genannten Art zu schaffen, mit welcher es möglich ist, auf die tatsächlichen Verhältnisses in einzelnen Rottezellen gezielt Rücksicht zu nehmen, und bei welcher die konstruktiv und wartungstechnisch

- 2 -

teuren Teile vollständig von den aggressiver. Dämpfen bzw. vom Eintritt von Abwasser ferngehalten werden. Zur Lösung dieser Aufgabe besteht die Erfindung im wesentlichen darin, daß an die Rottezellen, vorzugsweise an die Abscheidekammern derselben, mit Druckmedium beaufschlagbare Injektordüsen mit ihrer Saugseite angeschlossen sind. Derartige Injektordüsen sind einfache Verschleißteile und können ohne nennenswerten Zeit- und Kostenaufwand im Falle einer Korrosion bzw. übermäßigen Verunreinigung ausgetauscht werden. Derartige Injektordüsen haben darüber hinaus den Vorteil, daß sie gezielt durch ein Druckmedium angesteuert werden können, so daß eine den tatsächlichen Verhältnissen in den einzelnen Rottezellen Rechnung tragende selektive Belüftung einer großen Anzahl nebeneinander geschalteter Rottezellen ermöglicht wird. Hiezu sind in vorteilhafter Weise zwischen den Rottezellen und der Saugseite der Injektoren Absperrventile oder -klappen angeordnet, wodurch es möglich ist, einzelne Rottezellen ohne Beeinflussung benachbarter Rottezellen zu belüften.

In besonders einfacher Weise können die jeweils einem Injektor bzw. einer Injektordüse zugeordneten Klappen durch das gleiche Druckmedium betätigbar sein, welches auch in den Injektordüsen Verwendung findet. In besonders vorteilhafter Weise wird hiebei als Druckmedium Preßluft eingesetzt.

Durch die Verwendung von Druckluft als Druckmedium ist es möglich, die Wirtschaftlichkeit und insbesondere den Energieverbrauch der Einrichtung wesentlich günstiger zu gestalten als bei der Verwendung von Radialgebläsen. Hiezu wird in vorteilhafter Weise die Druckmittelquelle als Druckluftspeicher ausgebildet, an welchen wenigstens ein Kompressor oder ein Gebläse, insbesondere ein Schraubenkompressor oder ein Drehkolbengebläse angeschlossen ist. Dieser Kompressor bzw. dieses Gebläse kann in geschützten Maschinenräumen aufgestellt werden und kommt nicht unmittelbar mit aggressiven Dämpfen aus den Rottezellen in Kontakt. Der Aufbau des Kompressors oder des Gebläses in einem geschützten Maschinenraum erleichtert darüber hinaus die Wartungsarbeiten, da diese unabhängig von Witterungsbedingungen ausgeführt werden können.

Zur weiteren Verbesserung der Energiebilanz ist die Aus-bildung vorzugsweise so getroffen, daß an den Druckluft-speicher ein mit fester Antriebsdrehzahl laufender Kompressor für die der niedrigsten zum Betrieb notwendigen Luftmenge entsprechende Grundluftmenge je Zeiteinheit und ein zusätzlicher in seiner Luftleistung regelbarer Kompressor, insbesondere ein drehzahlgesteuerter Kolbenkompressor zur Ergän-zung der Luftmenge für den Vollastbetrieb angeschlossen ist. Mit einer derartigen Ausbildung kann dem jeweils erforderlichen Luftdurchsatz bei geringstem Energieverbrauch Rechnung getragen werden und die jeweils erforderliche Antriebsleistung für die Ansaugung von Luft aus den Rottezellen kann den jeweiligen Bedürfnissen exakt angepaßt werden.

Zur selektiven Ansteuerung einer Mehrzahl von Rottezellen können in vorteilhafter Weise in die Leitungen vom Druckluftspeicher gegebenenfalls unter Zwischenschaltung eines Druckreduzierventiles steuerbare und/oder regelbare Ventile zu den einzelnen Injektoren angeordnet sein. Diese steuerbaren und/oder regelbaren Ventile können in vorteilhafter Weise elektrisch, insbesondere elektromagnetisch betätigbar sein, sodaß eine einfache und betriebssichere Steuerelektronik Verwendung finden kann, um die Belüftung einzelner Rottezellen in Übereinstimmung mit den in der zugehörigen Rottezelle herrschenden tatsächlichen Bedingungen vorzunehmen. Da die Injektordüsen kostengünstige einfache Bauteile ohne bewegliche Teile darstellen, ist es ohne weiteres möglich, jeder einzelnen Rottezelle eine gesonderte Injektordüse zuzuordnen, womit tatsächlich jede Rottezelle für sich einer gesonderten und selektiven Belüftung unterworfen werden kann. Zur Steuerung bzw. Regelung dieser elektrisch bzw.

elektromagnetisch betätigbaren Ventile ist ir vorteilhafter Weise eine Steuereinheit vorgesehen, welche mit Signalleitungen von innerhalb der Rottezellen angeordneten Sensoren, insbesondere Temperatur- und/oder Feuchtigkeitssensoren, verbunden ist.

Um ein gleichzeitiges Öffnen der jeweiligen Klappen zwischen den Abscheidekammern und den zugehörigen Injektoren bei Beaufschlagen der Injektoren mit dem Druckmedium sicherzustellen, werden mit Vorteil im Schließsinne federbelastete Klappen eingesetzt, welche mit Druckmedium im Öffnungssinn betätigbar sind. Diese mit Druckmedium betätigbaren Klappen können in vorteilhafter Weise über Druckleitungen mit den Leitungen zu den jeweils entsprechenden Injektoren zwischen den steuer- oder regelbaren Ventilen und dem Injektor verbunden sein, so daß immer dann, wenn die Leitung zu einem bestimmten Injektor durch das steuer- oder regelbare Ventil mit Druckmedium beaufschlagt wird, auch die zugehörige Klappe im Öffnungssinne betätigt wird.

Zur Verringerung der Lärmbelastung ist in vorteilhafter Weise die Druckseite des oder der Injektoren mit wenigstens einem Schalldämpfer und/oder einem Filter verbunden. Als Filter kommt hiebei in besonders einfacher Weise ein Erdfilter in Frage, wobei die Abwärme aus den Rottezellen unmittelbar für den Anbau und das Wachstum von Erntegut ausgenützt werden kann. Die Abwärme kann naturgemäß auch durch an den Schalldämpfer oder das Filter angebaute Wärmetauscher rückgewonnen werden und insbesondere im Winterbetrieb den einzelnen Rottezellen rückgeführt werden.

Durch Injektordüsen ist ohne weiteres ein Unterdruck von mehr als 100 mb erreichbar, wodurch sich eine wirksame und gleichmäßige Belüftung der einzelnen Rottezellen ergibt.

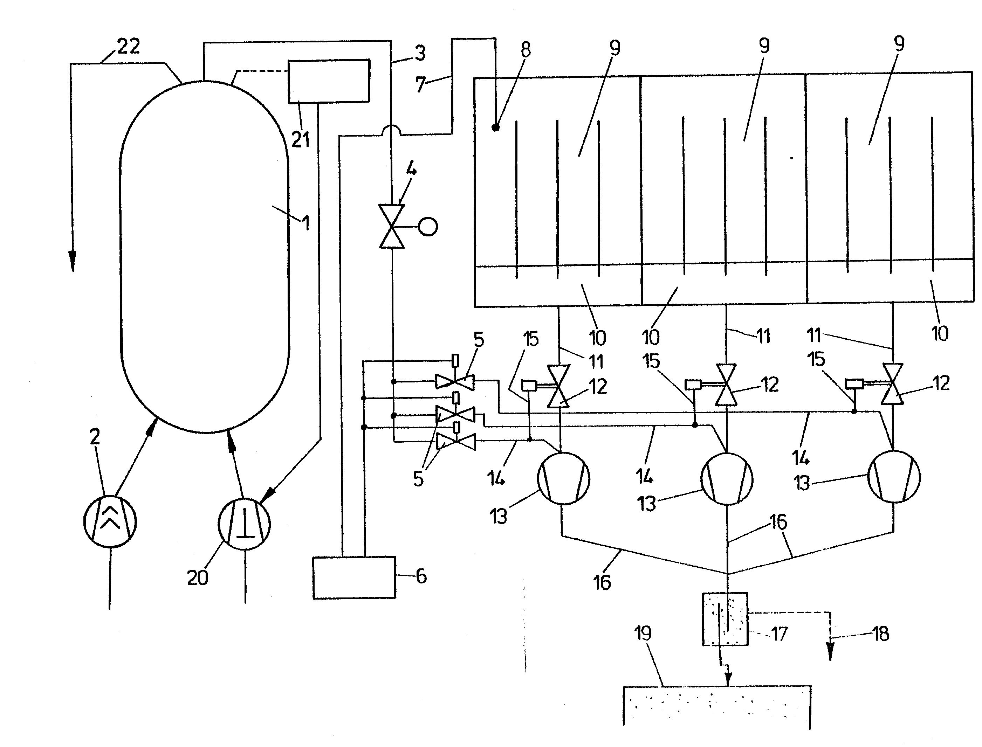

Die Erfindung wird nachfolgend an Hand eines in der Zeichnung schematisch dargestellten Ausführungsbeispieles näher erläutert.

In der Zeichnung ist mit 1 ein Preßluftspeicher bezeichnet, welcher über einen Schraubenkompressor 2 bzw. ein Drehkolbengebläse mit Preßluft gespeist wird. Die in dem Preßluftspeicher 1 gespeicherte Druckluftmenge gelangt über eine Leitung 3 und ein Druckreduzierventil 4 zu einzelnen steuer- oder regelbaren Ventilen 5, wobei die zugehörige Steuereinheit mit 6 bezeichnet ist. Diese Steuereinheit 6 ist über eine Signalleitung 7 mit wenigstens einem Temperatur- oder Feuchtigkeitssensor 8 im Inneren wenigstens einer Rottezelle 9 verbunden. In der Zeichnung sind drei nebeneinander angeordnete Rottezellen 9 dargestellt, an deren unteren Enden Abscheidekammern 10 vorgesehen sind.

An die Abscheidekammern 10 sind Saugleitungen 11 angeschlossen, in welche pneumatisch öffenbare und durch Federdruck schließbare Klappen 12 eingeschaltet sind.

Jeder der einzelnen Rottezellen 9 ist eine gesonderte Injektordüse 13 zugeordnet, deren Druckmittelleitungen 14 zu jeweils einem der steuer- oder regelbaren Ventile 5 führt. Zwischen dem steuerbaren bzw. regelbaren Ventil 5 und dem jeweils zugeordneten Injektor bzw. der Injektordüse 13 mündet eine Steuerleitung 15 für den pneumatischen Antrieb der jeweils zugeordneten pneumatischen Klappe 12.

Wenn die Steuereinheit ein bestimmtes steuer- oder regelbares Ventil 5 aufsteuert, wird gleichzeitig mit der Beaufschlagung der zugehörigen Injektordüse 13 über die Steuerleitung 15 die zugehörige Klappe 12 geöffnet und aus der entsprechenden Rottezelle 9 Luft abgesaugt, wobei Umgebungsluft durch die Rottezelle 9 hindurchgesaugt wird.

Die Druckseiten der Injektordüsen 13 sind über Druckleitungen 16 mit einem Schalldämpfer 17 verbunden, aus welchem über eine Leitung 18 Kondensat abgeleitet werden kann. Nach dem Durchströmen des Schalldämpfers gelangt die noch warme Abluft in ein Filter 19.

Für den Fall, daß die von dem Schraubenkompressor bzw. dem Drehkolbengebläse 2 gelieferte Luftmenge nicht ausreicht, um den Druckmittelspeicher 1 auf dem erforderlichen Druckniveau zu halten, ist ein zusätzlicher Kolbenkompressor 20 mit einer dem Luftbedarf entsprechenden Drehzahlregelung vorgesehen. In Abhängigkeit vom Druck im Druckluftspeicher 1 wird dieser zusätzliche Kolbenkompressor durch eine Steuereinrichtung 21 betätigt und geregelt. Durch diesen beispielsweise durch einen thyristorgesteuerten Elektromotor betriebenen Kolbenkompressor kann die jeweils erforderliche Differenz zur Vollastmenge gedeckt werden. Gegebenenfalls überschüssige Druckluftmengen können über eine Leitung 22 einem weiteren pneumatischen Akkumulator zugeführt werden.

Mit dieser Einrichtung ist es durch die selektive Ansteuerung der einzelnen steuerbarer oder regelbarer Ventile 5 möglich, die einzelnen Rottezellen 9 unabhängig voneinander zu belüften, wobei die Energieaufnahme jeweils auf den Saughub für diese einzelnen Rottezellen beschränkt bleibt.

Das Filter 19 kann als mit Erde gefülltes Filterbecken ausgebildet sein, über welchem ein Glashaus errichtet ist. Mit einem derartigen Filterbecken läßt sich die Abwärme unmittelbar landwirtschaftlich nutzen, wobei die warmen, abgesaugten Gase von unten her in dieses Filterbecken beispielsweise durch Diffusoren eingeleitet werden.

Patentansprüche:

1. Einrichtung zur Belüftung von Rottegut, mit welcher Luft durch das Rottegut hindurch gesaugt wird, dadurch gekennzeichnet, daß an die Rottezellen (9), vorzugsweise an die Abscheidekammern (10) derselben, mit Druckmedium beaufschlagbare Injektordüsen (13) mit ihrer Saugseite angeschlossen sind.

2. Einrichtung nach Anspruch 1, dadurch gekennzeichnet, daß zwischen den Rottezellen (9) und der Saugseite der Injektoren (13) Absperrventile oder Klappen (12) angeordnet sind.

3. Einrichtung nach Anspruch 2, dadurch gekennzeichnet, daß die Klappen (12) durch Beaufschlagen mit dem Druckmedium betätigbar sind.

4. Einrichtung nach einem der Ansprüche 1, 2 oder 3, dadurch gekennzeichnet, daß als Druckmedium Preßluft eingesetzt ist.

5. Einrichtung nach einem der Ansprüche 1 bis 4, dadurch gekennzeichnet, daß die Druckmittelquelle als Druckluftspeicher (1) ausgebildet ist, an welchem wenigstens ein Kompressor oder Gebläse, insbesondere ein Schraubenkompressor (2) oder ein Drehkolbengebläse angeschlossen ist.

6. Einrichtung nach Anspruch 5, dadurch gekennzeichnet, daß an den Druckluftspeicher (1) ein mit fester Antriebsdrehzahl laufender Kompressor (2) für die der niedrigsten zum Betrieb notwendigen Luftmenge entsprechende Grundluftmenge je Zeiteinheit und ein zusätzlicher in seiner Luftleistung regelbarer Kompressor, insbesondere ein drehzahlgesteuerter Kolbenkompressor (20) zur Ergänzung der Luftmenge für den Vollastbetrieb angeschlossen ist.

7. Einrichtung nach einem der Ansprüche 1 bis 6, dadurch gekennzeichnet, daß in die Leitungen (3) vom Druckluftspeicher (1) gegebenenfalls unter Zwischenschaltung eines Druckreduzierventiles (4) steuerbare und/oder regelbare Ventile (5) zu den einzelnen Injektoren angeordnet sind.

8. Einrichtung nach Anspruch 7, dadurch gekennzeichnet, daß die steuer- und/oder regelbaren Ventile (5) elektrisch, insbesondere elektromagnetisch betätigbar sind.

9. Einrichtung nach Anspruch 8, dadurch gekennzeichnet, daß eine Steuereinheit (6) für die Ventile (5) vorgesehen ist, welche mit Signalleitungen (7) von innerhalb der Rottezellen (9) angeordneten Sensoren (8), insbesondere Temperatur- und/oder Feuchtigkeitssensoren, verbunden ist.

10. Einrichtung nach Anspruch 3, dadurch gekennzeichnet, daß die mit Druckmedium betätigbaren Klappen (12) über Druckleitungen (15) mit den Leitungen (14) zu dem jeweils entsprechenden Injektor (13) zwischen den steuer- oder regelbaren Ventilen (5) und dem Injektor (13) verbunden sind.

11. Einrichtung nach einem der Ansprüche 1 bis 10, dadurch gekennzeichnet, daß die Druckseite des oder der Injektor(en) (13) mit wenigstens einem Schalldämpfer (17) und/oder einem Filter (19) verbunden sind.